# EUROPÄISCHE PATENTSCHRIFT

(11) **EP 0 256 264 B1**
(45) Veröffentlichungstag und Bekanntmachung des Hinweises auf die Patenterteilung: **09.06.1993**
(21) Anmeldenummer: 87109272.2
(22) Anmeldetag: 27.06.1987
(51) Int. Cl.: H04N 9/64

(54) **Verfahren zum Empfang hochzeiliger Fernsehsignale**
Method for receiving television signals with a high number of lines
Méthode de réception de télévision à grand nombre de lignes

(30) Priorität: 14.08.1986 DE 3627640
(43) Veröffentlichungstag der Anmeldung: 24.02.1988
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hegendörfer, Max, Dipl.-Ing Grundig E.M.V., Kurgartenstrasse 37 D-8510 Fürth/Bay (DE)

(56) Entgegenhaltungen:
- US-A- 4 298 888
- FERNSEH UN KINOTECHNIK, Band 39, Nr. 10, Oktober 1985, Seiten 472-480, Heidelberg, DE; U. MESSERSCHMID: "Fernsehnormen für Rundfunksatelliten"
- NHK LABORATORIES NOTE, no. 326, Januar 1986, Seiten 2-15, Tokyo, JP; Y. TANAKA et al.: "HDTV-PAL standards converter"

## Beschreibung

Nach derzeitigem Stand der Technik sind weltweit die Fernsehstandards PAL, SECAM und NTSC mit einigen Varianten, die jedoch nicht die Bildzerlegung betreffen, eingeführt. Darüberhinaus ist die Einführung einer MAC-Standardfamilie (MAC für Multiplex Analogue Components) in Diskussion, bei der jedoch die Zeilenzahl und Vertikalfrequenz gegenüber PAL und SECAM unverändert bleibt.

Multistandard- bzw. Multinorm-Fernsehempfänger, die automatisch auf PAL, SECAM und NTSC umschalten, sind bereits gebräuchlich und beispielsweise in "Grundig Technische Informationen" 1-85, oder "Valvo Technische Informationen 83 09 19" ausführlich beschrieben. Mit Hilfe eines Einchip-Multistandard-Farbdecoders wird bei diesen Geräten der jeweils erforderliche Decodierungs- und Synchronisier/Ablenkprozeß automatisch aktiviert, so daß die Umschaltung von PAL zu NTSC bzw. SECAM oder umgekehrt nach Anwahl des betreffenden Senders ohne merkbaren Zeitverlust erfolgt.

Neuerdings gibt es Bestrebungen, die heutigen normalzeiligen Fernsehstandards längerfristig durch hochzeilige Fernsehstandards mit etwa doppelter Zeilenzahl und entsprechend 4-facher Bildpunktzahl abzulösen. Dabei ergibt sich aus technischen und wirtschaftlichen Gründen die Tendenz, einen weltweit einheitlichen HDTV-Standard (HDTV = High Definition Television) zu definieren. Leider gibt es dabei wegen der unterschiedlichen Vertikalfrequenzen bei NTSC einerseits (60 Hz) und PAL/SECAM (zukünftig auch MAC) 50 Hz andererseits erhebliche Probleme. Auf sechs Teilbilder des NTSC-Standards entfallen nämlich nur fünf Teilbilder der PAL/SECAM/MAC-Standards. Soll der technische Aufwand in Grenzen bleiben, so muß deshalb bei Wandlung von NTSC 60 Hz in PAL/SECAM/MAC 50 Hz von sechs Teilbildern jeweils eines unterdrückt werden. Umgekehrt muß bei Wandlung von PAL/SECAM/MAC in NTSC jedes 5. Teilbild repetiert werden. Da jedoch jedes Teilbild eine bestimmte Bewegungsphase des Bildablaufs enthält, entstehen in den normgewandelten Signalen Bewegungsartefakten, die zumindest bei bestimmten Bewegungsabläufen störend in Erscheinung treten.

Die genannten Bewegungsartefakten können durch technisch sehr aufwendige Normwandler, die mit Bewegungsprediktion und Teilbildinterpolation arbeiten, weitgehend unterdrückt werden. Derartige Normwandler sind aber aus Kostengründen auf absehbare Zeit empfängerseitig nicht einsetzbar.

Die Erfindung geht von der Situation aus, daß einerseits konventionelle, normalzeilige und andererseits HDTV-Fernsehsignale von terrestrischen Sendern oder Satelliten-Sendern abgestrahlt werden und das Bedürfnis besteht, mit konventionellen Multistandard-Fernsehempfängern die HDTV-Programme zu verfolgen.

Die Erfindung geht ferner von der Erkenntnis aus, daß die Normwandlung von HDTV-Signalen in normalzeilige Fernsehsignale dann mit geringen technischen Problemen verbunden ist, wenn die Vertikalfrequenzen beim eingangsseitigen HDTV-Signal und beim ausgangsseitigen normalzeiligen Signal gleich sind. Mit anderen Worten, die Wandlung eines HDTV-Signals 1125 Zeilen/60 Hz in ein NTSC-Signal 525 Zeilen/60 Hz oder die Wandlung eines HDTV-Signals 1249 Zeilen/50 Hz in ein PAL/SECAM-Signal 625 Zeilen/50 Hz ist verhältnismäßig einfach und auch empfängerseitig realisierbar.

Aufgabe der Erfindung ist es, ein empfängerseitiges Verfahren anzugeben, mit dem bei geringem technischen Aufwand mit gebräuchlichen Multistandard-Empfängern HDTV-Sendungen wiedergegeben werden können.

Natürlich erfolgt die Wiedergabe der HDTV-Sendung auf dem gebräuchlichen Multistandard-Empfänger mit verminderter Auflösung, so wie beim normalzeiligen Fernsehen üblich.

Die Normwandlung kann in einfacher und bekannter Weise dadurch erfolgen, daß aus dem hochzeiligen Signal nur jede zweite Zeile selektiert, zwischengespeichert und dann mit einer Geschwindigkeit aus dem Speicher gelesen wird, die der Zeilenfrequenz bei normalzeiliger Wiedergabe entspricht.

Nach einem weiteren kennzeichnenden Merkmal der Erfindung liefert der dem Multistandard-Fernsehempfänger vorgeschaltete Normwandler zusätzlich bei Empfang eines HDTV-Signals ein Ausgangssignal, mit dem das Seitenverhältnis des durch den Multistandard-Fernsehempfänger wiedergegebenen Bildes vom Normalformat 4 : 3 auf das Breitformat 5,33 : 3 umgeschaltet werden kann. HDTV-Signale werden nämlich zur Erzielung des von der Kinofilmprojektion her bekannten Breitwandeffektes in einem anderen Bildseitenverhältnis produziert. Soll auf dem normalzeiligen Fernsehempfänger, dessen Bildröhre im konventionellen Seitenverhältnis 4 : 3 ausgeschrieben wird, das Bild in Breitformat komplett wiedergegeben werden, dann muß die vertikale Ablenkamplitude reduziert werden.

Die Erfindung ist von Bedeutung für die Einführungsphase des hochzeiligen Fernsehens. Durch die Anwendung des erfindungsgemäßen Verfahrens können nicht nur mit neuen, hochzeiligen Fernsehempfangsgeräten die HDTV-Sendungen wiedergegeben werden, sondern bei begrenztem zusätzlichem Aufwand ist auch mit konventionellen Multistandard-Fernsehgeräten eine Bildwiedergabe möglich.

## Patentansprüche

1. Verfahren zum Fernsehempfang hochzeiliger Fernsehsignale mit einem für den Empfang gebräuchlicher Fernsehstandards wie PAL, SECAM, NTSC geeigneten Multistandard-Fernsehempfänger, **dadurch gekennzeichnet,** daß dem Multistandard-Fernsehempfänger ein Normwandler vorgeschaltet ist, der das hochzeilige Fernsehsignal mit gegenüber den gebräuchlichen Fernsehstandards etwa verdoppelter Zeilenzahl in ein normalzeiliges Fernsehsignal wandelt, das durch den Multistandard-Fernsehempfänger verarbeitet werden kann, wobei die Halbbildfrequenz des hochzeiligen Fernsehsignals und des nach der Normwandlung entstehenden normalzeiligen Fernsehsignals gleich sind, und daß der Normwandler bei Empfang eines hochzeiligen Fernsehsignals ein Ausgangssignal liefert, mit dem das Seitenverhältnis des durch den Multistandard-Fernsehempfänger wiedergegebenen Bildes vom Normalformat (4 : 3) auf Breitformat (z.B. 5,33 : 3) umgeschaltet wird.

## Claims

1. A method for the television reception of high-resolution television signals by means of a multi-standard television receiver suitable for the reception of conventional television standards such as PAL, SECAM, NTSC, characterised in that the multi-standard television receiver is preceded by a standards converter which converts the high-resolution television signal into a standard-line television signal with about twice the number of lines compared with the conventional television standards, which standard-line television signal can be processed by the multi-standard television receiver, the field frequency of the high-resolution television signal and of the standard-line television signal produced after the standards conversion being equal, and in that the standards converter, on reception of a high-resolution television signal, supplies an output signal by means of which the aspect ratio of the picture reproduced by the multi-standard television receiver is switched from standard format (4 : 3) to wide format (e.g. 5.33 : 3).

## Revendications

1. Procédé pour la réception de signaux de télévision à haute définition au moyen d'un récepteur de télévision multistandard adapté pour la réception de standards de télévision usuels tels que le PAL, le SECAM, le NTSC, caractérisé en ce que l'on branche devant le récepteur de télévision multistandard un convertisseur de normes qui convertit le signal de télévision à haute définition présentant un nombre de lignes sensiblement double par rapport au standard de télévision usuel en un signal de télévision présentant un nombre de lignes normal qui peut être traité par le récepteur de télévision multistandard, les fréquences de trame du signal de télévision à haute définition et du signal de télévision à nombre de lignes normal obtenu après la conversion de normes étant égales, et en ce que le convertisseur de normes fournit, lors de la réception d'un signal de télévision à haute définition, un signal de sortie grâce auquel on fait passer le rapport hauteur/largeur de l'image rendue par le récepteur de télévision multistandard du format normal (4/3) au format large (par exemple 16/9).
